# EUROPÄISCHE PATENTANMELDUNG

(11) **EP 2 618 071 A2**
(43) Veröffentlichungstag der Anmeldung: **24.07.2013**
(21) Anmeldenummer: 13151773.2
(22) Anmeldetag: 18.01.2013
(51) Int. Cl.: F24H 9/12, F24D 11/00, F28D 20/00

(54) **Schichtenspeicher**

(30) Priorität: 19.01.2012 DE 102012100423
(71) Anmelder: Kools, Beau, 6171 NG Stein (NL); Kools, Max, 6171 NG Stein (NL)
(72) Erfinder: Krengel, Günter, 6171 NG Stein (NL)
(74) Vertreter: Bauer, Dirk

(57) **Zusammenfassung**

Die Erfindung betrifft einen Schichtenspeicher zum Speichern von Wärmeenergie, aufweisend einen Schichteinsatz (1) und einen Speicherbehälter, der mittels Rohrleitungen mit mindestens einem Energieerzeuger sowie mindestens einem Energieverbraucher verbunden ist und mindestens zwei Zuführöffnungen (9, 9', 9") und zwei Abführöffnungen (24, 24') aufweist, wobei mittels der Zuführöffnungen (9, 9', 9") dem Schichtenspeicher ein Wärmeträgermedium zuführbar und mittels der Abführöffnungen (24, 24') das Wärmeträgermedium aus dem Schichtenspeicher abführbar ist, wobei der Schichtenspeicher eine Zuführkammer (2), eine Beruhigungskammer (7) und eine Abführkammer (16) aufweist, die in horizontale Richtung betrachtet nebeneinander angeordnet sind und sich jeweils vertikal erstrecken, wobei die Zuführkammer (2), die Beruhigungskammer (7) und die Abführkammer (16) in eine Fließrichtung des Wärmeträgermediums ausgehend von einer jeweiligen Zuführöffnung (9, 9', 9") hin zu einer jeweiligen Abführöffnung (24, 24') betrachtet in Reihe hintereinander geschaltet sind und zwei aneinander grenzende Kammern (2, 7, 16) jeweils mittels eines im wesentlichen vertikal angeordneten Trennelements (6, 19) räumlich voneinander getrennt sind, wobei die Trennelemente (6, 19) eine Vielzahl von über deren Höhe verteilte Öffnungen (8, 26) aufweisen, durch die das Wärmeträgermedium von einer an das jeweilige Trennelement (6, 19) angrenzenden Kammer (2, 7) zu einer jeweils anderen an das Trennelement (6, 19) angrenzenden Kammer (7, 16) leitbar ist.

Um einen Schichtenspeicher hervorzubringen, bei dem eine Durchmischung der verschiedenen Temperaturschichten weitestgehend vermieden wird, wird erfindungsgemäß vorgeschlagen, die Zuführkammer (2) mittels mindestens eines horizontal orientierten Schottelements (3) in eine obere und eine untere Zuführkammersektion (4) zu unterteilen, wobei die Zuführkammersektionen (4) vorzugsweise hydraulisch miteinander verbunden sind.

## Beschreibung

### Einleitung

Die Erfindung betrifft einen Schichtenspeicher zum Speichern von Wärmeenergie, aufweisend einen Schichteinsatz und einen Speicherbehälter, der mittels Rohrleitungen mit mindestens einem Energieerzeuger sowie mindestens einem Energieverbraucher verbunden ist und mindestens zwei Zuführöffnungen und zwei Abführöffnungen aufweist, wobei mindestens eine Zuführöffnung mit dem Energieerzeuger und mindestens eine Zuführöffnung mit dem Energieverbraucher sowie mindestens eine Abführöffnung mit dem Energieerzeuger und mindestens eine Abführöffnung mit dem Energieverbraucher verbunden sind, wobei mittels der Zuführöffnungen dem Schichtenspeicher ein Wärmeträgermedium zuführbar und mittels der Abführöffnungen das Wärmeträgermedium aus dem Schichtenspeicher abführbar ist, wobei der Schichtenspeicher eine Zuführkammer, eine Beruhigungskammer und eine Abführkammer aufweist, die in horizontale Richtung betrachtet nebeneinander angeordnet sind und sich jeweils vertikal erstrecken, wobei die mindestens zwei Zuführöffnungen mit der Zuführkammer und die mindestens zwei Abfuhröffnungen mit der Abführkammer korrespondieren, wobei die Zuführkammer, die Beruhigungskammer und die Abführkammer in eine Fließrichtung des Wärmeträgermediums ausgehend von einer jeweiligen Zuführöffnung hin zu einer jeweiligen Abführöffnung betrachtet in Reihe hintereinander geschaltet sind und zwei aneinander grenzende Kammern jeweils mittels eines im wesentlichen vertikal angeordneten Trennelements räumlich voneinander getrennt sind, wobei die Trennelemente eine Vielzahl von über deren Höhe verteilte Öffnungen aufweisen, durch die das Wärmeträgermedium von einer an das jeweilige Trennelement angrenzenden Kammer zu einer jeweils anderen an das Trennelement angrenzenden Kammer leitbar ist.

### Stand der Technik

Die Technik der Temperaturschichtung von Wasser in einem Speicherbehälter ist seit geraumer Zeit bekannt. Sie basiert im Wesentlichen auf der Erkenntnis, dass das Durchmischen von warmem und kaltem Wasser immer mit einem Energieverlust einhergeht, da bewusst auf eine hohe Temperatur gebrachtes Wasser nicht länger auf dieser Temperatur verfügbar ist, sondern durch kälteres Wasser, mit dem es in einem konventionellen Wasserspeicher vermischt wird, abgekühlt wird. Um also beispielsweise Wasser mit einer Temperatur von 70 °C für einen Vorlauf eines konventionellen Heizkörpers aus einem herkömmlichen Wasserspeicher entnehmen zu können, ist es im Vorfeld notwendig, deutlich wärmeres Wasser von einem Energieerzeuger - beispielsweise einem Brennwertkessel - in den Wasserspeicher zu leiten, da es, sobald es in den Speicher gelangt, durch das kältere, bereits in dem Speicher vorhandene Wasser abgekühlt wird. Damit die Vorlauftemperatur von 70 °C also eingehalten werden kann, ist ein erhöhter Energieeinsatz notwendig, der das Wasser über das gewünschte Maß hinaus erhitzt.

Der Schichtenspeicher löst dieses Problem durch eine temperaturabhängige Schichtung des Wassers innerhalb des Wasserspeichers, indem eine Durchmischung des Wasservorrates verhindert wird. Die Schichtung selbst muss dabei nicht künstlich erzeugt werden, sondern bildet sich aufgrund der unterschiedlichen Dichten des Wassers in Abhängigkeit von der Temperatur vielmehr automatisch. Konkret bedeutet dies, dass warmes Wasser leichter ist als kaltes Wasser und folglich eine ruhende Wassermenge eine natürliche Schichtung von kalt (unten) zu warm (oben) ausbildet. Die Entwicklung der Schichtenspeicher befasst sich daher vornehmlich mit der Problematik des Einleitens von Wasser in den Schichtenspeicher, ohne die natürliche Schichtung zu "zerstören". Die Schwierigkeit beim Betrieb eines Schichtenspeichers liegt nämlich darin, dass die natürliche Schichtung des Wassers relativ viel Zeit benötigt und durch Strömungen mit einer vertikalen Strömungskomponente sehr leicht gestört werden kann. Eine solche Störung äußert sich in einer Durchmischung von Schichten unterschiedlicher Temperatur, was direkt zu einer Abkühlung der jeweils wärmeren Schicht führt, welche entsprechend nicht länger auf dem ursprünglichen Temperaturniveau verfügbar ist.

Eine Möglichkeit zur turbulenzfreien Einleitung von Wasser in einen Schichtenspeicher behandelt beispielsweise die DE 39 05 874 C2. Diese zeigt einen Speicherbehälter, der ein zentral angeordnetes Steigrohr aufweist, welches auf unterschiedlichen Höhenniveaus mit Öffnungen versehen ist, welche mittels Klappelementen hydraulisch von dem Schichtenspeicher abgetrennt sind. Das Steigrohr dient als Zuführleitung für von einem Wärmeerzeuger erwärmtes Wasser in den Speicher. In Abhängigkeit von den Temperaturverhältnissen der Schichtung des in dem Speicherbehälter befindlichen Wassers, kann das vom Wärmeerzeuger in das Steigrohr geleitete Wasser nur auf demjenigen Höhenniveau aus einer jeweiligen Öffnung in den Speicherbehälter strömen, auf der das umgebende Wasser die selbe oder eine kleinere Dichte aufweist, als das in dem Steigrohr aufsteigende Wasser. Ein Austreten des zugeführten Wassers aus dem Steigrohr in den Speicherbehälter durch eine Öffnung, die in eine relativ kalte Schicht führt und so eine unerwünschte Mischung warmen und kalten Wassers bedeuten würde, wird dadurch unterbunden, dass die jeweiligen Klappelemente gegen den hydrostatischen Druck im Inneren des Speicherbehälters geöffnet werden müssen. Sofern die Dichte des im Steigrohr befindlichen Wassers geringer ist, als die Dichte des umgebenden Wassers (also das Wasser im Steigrohr wärmer ist als das umgebende Wasser), vermag es nicht, das "falsche" Klappelemente zu öffnen und kann folglich nicht auf der "falschen" Höhe aus dem Steigrohr auszutreten. Neben dieser Leitfunktion dienen die Klappelemente ferner als Prallbleche, die zu einer Reduktion der Strömungsgeschwindigkeit des durchtretenden Wassers beitragen.

Das in der DE 39 05 874 C2 gezeigte System weist den großen Nachteil auf, dass die natürliche Ausströmregulierung des warmen Wassers aus dem Steigrohr nur dann zuverlässig funktionieren kann, wenn der gesamte Massenstrom des in der Steigleitung aufsteigenden Wassers sehr gering ist. Ansonsten werden die Druckdifferenzen auf beiden Seiten der Klappelemente durch den Pumpendruck überwunden und das warme Wasser tritt in eine kältere Schicht ein, was die oben aufgeführten Nachteile nach sich zieht, die es gerade zu vermeiden gilt.

Ein weiterer Schichtenspeicher ist der DE 44 17 138 C2 entnehmbar. Dieser weist ebenfalls ein zentral angeordnetes Rohrelement auf, welches mittels einer vertikalen Wandung in zwei Teile, eine Vorlaufkammer und eine Rücklaufkammer, unterteilt ist. Diese beiden Kammern sind mittels weiterer jeweiliger Einbauten ferner in Einström- und Beruhigungskammern unterteilt. Dieser Schichtenspeicher basiert auf dem Prinzip, dass dem Speicher warmes Wasser nur dann zugeführt wird, wenn gerade kein warmes Wasser entnommen wird. Im Falle hohen Energieverbrauchs (beispielsweise hohe Nachfrage von Wärme an den Heizkörperstationen) wird das vom Energieerzeuger dem Speicher zugeführte Wasser direkt aus der Vorlaufkammer abgezogen und den Heizkörpern zugeführt. Dies wird als so genannte "Kurzschlussströmung" bezeichnet. Eine "Aufladung" des Schichtenspeichers mit warmem Wasser, das heißt eine Zuführung warmen Wassers, jedoch eine ausbleibende Entnahme desselben, erfolgt entsprechend nur dann, wenn gerade kein hoher Verbrauch warmen Wassers vorliegt. Das vom Energieerzeuger in den Speicher fließende Wasser wird dabei durch die Anordnung der erläuterten Trennwände abgebremst, so dass es möglichst turbulenzfrei aus dem zentralen Rohrelement in den umgebenden Schichtenspeicher übertreten kann. Somit ist zwar ein turbulenzarmes Einleiten des Wassers in den umgebenden Speicher möglich, eine Durchmischung des Wassers bereits in der Vorlaufkammer wird bei der gezeigten Vorrichtung aber nicht unterbunden.

Eine weitere Anordnung zeigt die DE 101 23 305 A 1, welche einen Schichtenspeicher der eingangs beschriebenen Art beschreibt, wobei die Zuführkammer und die Beruhigungskammer - ähnlich zu dem vorgenannten Speicher - in einem zentral angeordneten Rohrelement ausgebildet sind, welches von der Abführkammer umgeben wird. Die Zuführkammer ist dabei mit mehreren Zuführleitungen versehen, die auf unterschiedlichen Höhenniveaus angeordnet sind und auf diese Weise bereits der erwarteten Wassertemperatur des durch sie in den Speicher geleiteten Wassers Rechnung tragen. Der gezeigte Speicher weist vor allem den Nachteil auf, dass die einzelnen in die Zuführkammer strömenden Massenströme unterschiedlicher Temperatur bereits in der Zuführkammer vermischt werden. Ein weiterer Nachteil des gezeigten Speichers liegt in der potentiell kurzen Fließstrecke des Wassers innerhalb des Speicherbehälters. Somit ist es ohne weiteres möglich, dass dem Speicher warmes Wasser in die Zuführkammer zugeleitet wird und gleichzeitig eine große Entnahmemenge auf einer zu der jeweiligen Zuführleitung ähnlichen Höhe durch eine Abführleitung entnommen wird. Ein KurzscNuss zwischen einer Zuführleitung und einer Abführleitung ist im Betrieb daher wahrscheinlich, da durch die zentrale Anordnung der Zuführkammer in den Speicher ein Fließweg von der Zuführöffnung zur Entnahmeöffnung minimal ist.

### Aufgabe

Der Erfindung liegt daher die Aufgabe zugrunde, einen Schichtenspeicher hervorzubringen, bei dem eine Durchmischung der verschiedenen Temperaturschichten weitestgehend vermieden wird.

### Lösung

Die zugrunde liegende Aufgabe wird ausgehend von einem Schichtenspeicher der eingangs beschriebenen Art erfindungsgemäß dadurch gelöst, dass die Zuführkammer mittels mindestens eines horizontal orientierten Schottelements in eine obere und eine untere Zuführkammersektion, vorzugsweise mittels einer Vielzahl horizontal orientierter Schottelemente in mehrere vertikal übereinander angeordnete Zuführkammersektionen, unterteilt ist, wobei die einzelnen Zuführkammersektionen vorzugsweise hydraulisch miteinander verbunden sind. Die Begriffe Zuführkammer und Abführkammer sind dabei so zu verstehen, dass vorzugsweise sämtliche Massenströme, die in den Schichtenspeicher gelangen, durch die Zuführöffnungen in die Zuführkammer eintreten und weiter vorzugsweise sämtliche Massenströme, die aus dem Schichtenspeicher abgeführt werden, durch die Abführöffnungen aus der Abführkammer austreten. Eine Ausnahme hiervon bildet die Entnahme warmen Wassers zur Erwärmung von Trinkwasser, welches vorteilhafter Weise aus der Beruhigungskammer entnommen werden sollte. Diese Ausgestaltung des Schichtenspeichers wird später gesondert erläutert.

Die Unterteilung der Zuführkammer in einzelne Sektionen führt dazu, dass in den Schichtenspeicher eingeleitetes Wasser schon bei der Einleitung in den Speicher an einer Durchmischung mit anderen Wasserschichten gehindert wird. Die mindestens zwei Zuführöffnungen sind dabei typischerweise jeweils auf unterschiedlichen Höhenniveaus angeordnet, da durch sie Wasserströme unterschiedlicher Temperatur dem Schichtenspeicher zugeführt werden. Während beispielsweise ein Vorlauf eines Heizungskessels eine Temperatur von 80 °C aufweist, beträgt die Rücklauftemperatur vom Heizkörper beispielsweise 50 °C. Hier ist es sinnvoll, die Zuführöffnung, durch die das Wasser mit der hohen Temperatur in den Speicherbehälter einströmt, höher innerhalb der Zuführkammer anzuordnen, als die Zuführöffnung, an die der Heizungsrücklauf angeschlossen ist. Ferner sollten die beiden Zuführöffnungen mit unterschiedlichen Zuführkammersektionen korrespondieren, die mittels des erfindungsgemäßen Schottelements voneinander getrennte Räume innerhalb der Zurührkammer bilden. Auf diese Weise kann eine Vermischung der unterschiedlich temperierten Wasserströme besonders effektiv vermieden werden.

Die Unterteilung der Zuführkammer in einzelne Zuführkammersektionen bietet ferner den Vorteil, dass die eintretenden Zuführströme des jeweils durch die Zuführöffnungen eintretenden Wassers lokal "gebremst" werden. Die zutretenden Wasserströme bleiben daher aufgrund der Schottelemente nicht nur in ihrer Durchmischungswirkung lokal begrenzt sondern werden ferner durch die Schottelemente abgebremst und werden auf diese Weise besonders zügig beruhigt.

Für die Funktionsweise des Schichtenspeichers ist es besonders vorteilhaft, wenn die einzelnen Zuführkammersektionen trotz der Trennung mittels der Schottelemente hydraulisch miteinander verbunden sind. Dies kann besonders einfach anhand des oben genannten Beispiels erläutert werden, bei dem die Zuführöffnungen des Kesselvorlaufs sowie des Heizungsrücklaufs direkt an unterschiedliche Zuführkammersektionen angeschlossen sind, die in etwa der zu erwartenden Wassertemperatur entsprechen (Kesselvorlauf 80 °C, Heizungsrücklauf 50 °C). Für den Fall, dass die Temperaturen nicht den Erwartungswerten entsprechen, wird sich das in die Zuführkammer eingeleitete Wasser aufgrund der Dichteverhältnisse bei unterschiedlichen Temperaturen entsprechend "einschichten". So kann es beispielsweise möglich sein, dass die Temperatur des Heizungsrücklaufs erheblich über 50 °C liegt, beispielsweise, weil die Heizkörper aufgrund eines niedrigen Temperaturgradienten zwischen den Heizkörpern und dem zu beheizenden Raum dem Heizungswasser kaum Wärme entziehen und das Wasser mit 60 °C anstatt der typischen 50 °C in die Zuführkammer einströmt. Das warme Wasser würde in der zugehörigen Zuführkammersektion das bereits vorhandene Wasser erwärmen und auf diese Weise dessen Dichte verringern, wodurch es bestrebt wäre, aufzusteigen. Durch eine hydraulische Verbindung der einzelnen Zuführkammersektionen ist dies ohne weiteres möglich. Sollten hingegen die einzelnen Zuführkammersektionen hydraulisch voneinander abgetrennt vorliegen, wäre es sogar denkbar, dass eine obere Sektion mit kälterem Wasser oberhalb einer solchen Sektion mit wärmerem Wasser angeordnet wäre.

In einer besonders vorteilhaften Ausgestaltung des Schichtenspeichers sind die Zuführkammersektionen mittels mindestens eines rohrförmigen Austauschelements hydraulisch miteinander verbunden, wobei sich das Austauschelement vorzugsweise über eine gesamte Höhe der Zuführkammer erstreckt. Der Austausch unterschiedlich warmen Wassers ist mittels eines derartigen Austauschelements besonders einfach möglich. Dieses kann beispielsweise die Form eines Rohres aufweisen und über dessen gesamte Höhe mit Öffnungen versehen sein, die jeweils in die unterschiedlichen Zuführkammersektionen münden.

Eine typische Ausgestaltung des erfindungsgemäßen Schichtenspeichers sieht neben den mindestens zwei Zuführöffnungen weitere Zuführöffnungen vor, die mit unterschiedlichen Energieerzeugern (beispielsweise einer Wärmepumpe oder einer Solaranlage) und/oder unterschiedlichen Energieverbrauchern verbunden sind (beispielsweise Trinkwasser und/oder einer Fußbodenheizung). Die Zuführöffnungen sollten dabei vorteilhafterweise mit unterschiedlichen Zuführkammersektionen korrespondieren, also vertikal innerhalb der Zuführkammer versetzt angeordnet werden, damit das durch sie in die Zuführkammer eingeleitete Wasser direkt auf einer solchen Höhe in die Zuführkammer strömt, die voraussichtlich der Temperatur der auf dieser Höhe angeordneten Wasserschicht des Schichtenspeichers entspricht. Das heißt, dass die Zuführöffnungen umso höher in einer umso höheren Zuführkammersektion angeordnet sein sollten, desto höher die voraussichtliche Temperatur des durch sie in die Zuführkammer eingeleiteten Wassers ist. Folglich sind Rückläufe von Energieverbrauchern typischerweise niedriger in der Zuführkammer angeordnet als die Vorläufe der Energieerzeuger.

Um eine Durchmischung des Wassers in der Zuführkammer weiter zu reduzieren, ist es besonders vorteilhaft, wenn mindestens ein geschlossenes Verzögerungselement in der Zuführkammer angeordnet ist, in das mindestens eine Zuführöffnung mündet, wobei eine Wandung des Verzögerungselements eine Vielzahl von Öffnungen aufweist, durch die das Wärmeträgermedium ausgehend von der jeweiligen Zuführöffnung in die jeweilige Zuführkammersektion leitbar ist, wobei im Falle mehrerer Zuführöffnungen vorzugsweise jede Zuführöffnung eine eigenes Verzögerungselement aufweist. Derartige Verzögerungselemente bewirken, dass der durch die Zuführöffnungen in die Zuführkammersektion eingeleitete Flüssigkeitsstrom direkt in seiner Geschwindigkeit gedrosselt wird und auf diese Weise die Durchmischungswirkung des Flüssigkeitsstroms auf ein Minimum reduziert wird. Auf diese Weise kann sogar erreicht werden, dass sich innerhalb einer Zuführkammersektion eine stabile Schichtung ausbildet, die nur minimal durch das einströmende Wasser der Zuführöffnungen gestört wird.

Analog zur Zuführkammer ist eine solche Abführkammer besonders vorteilhaft, die eine Vielzahl vertikal versetzter Abführöffnungen aufweist, die jeweils mit der Abführkammer korrespondieren. Da das Wasser in dem Schichtenspeicher in Schichten unterschiedlicher Temperatur vorliegt, kann durch eine geschickte Platzierung der Abführöffnungen eben jenes Wasser entnommen werden, dass die gewünschte Temperatur aufweist. Somit ist beispielsweise ein Heizungsvorlauf, der an normale Flächenheizkörper angeschlossen ist, vorteilhafterweise in einem oberen Bereich der Abführkammer anzuordnen, da im oberen Bereich Wasser mit hoher Temperatur befindlich ist. Rückläufe zu Energieerzeugern (Heizkessel, Solaranlage etc.) sollten hingegen eher in einem unteren Bereich der Abführkammer angeordnet werden und dem Schichtenspeicher kaltes Wasser entziehen.

In einer besonders vorteilhaften Ausgestaltung der Erfindung weist neben der Zuführkammer auch die Abführkammer mindestens ein horizontal orientiertes Schottelement auf, das die Abführkammer in eine untere und eine obere Abführkammersektion unterteilt und vorzugsweise die obere Abführkammersektion fluiddicht von der unteren Abführkammersektion abtrennt, wobei vorzugsweise mindestens eine Abführöffnung mit der unteren Abführkammersektion und mindestens eine weitere Abführöffnung mit der oberen Abführkammersektion korrespondieren. Ein solches Schottelement zur Unterteilung der Abführkammer hat den besonderen Vorteil, dass vertikal gerichtete Strömungen in der Abführkammer unterbunden werden. Derartige Strömungen treten auf, sobald Wasser durch eine Abführöffnung entnommen wird.

Beispielhaft wird hier der Fall betrachtet, dass dem Speicher Wärmeenergie zugeführt werden soll, wobei ein Energieerzeuger, beispielsweise ein Heizkessel aktiviert werden muss. Der Kesselrücklauf, das heißt der Anschluss, mittels dem Wasser zum Heizkessel geführt wird, sollte entsprechend obiger Erläuterung in einem unteren Bereich des Schichtenspeichers angeordnet sein und dort dem Schichtenspeicher kaltes Wasser entziehen. Gleichzeitig wird dem Schichtenspeicher in der Zuführkammer - vorteilhafterweise in der obersten Zuführkammersektion - das durch den Energieerzeuger erhitzte Wasser wieder zugeführt, wobei die Zuführ- und Abführmassenströme identisch sind.

Die Entnahme des kalten Wassers mittels der Abführöffnung führt schließlich zu einer lokalen Strömung, die zur Abführöffnung gerichtet ist. Optimalerweise strömt das Wasser der Abführöffnung lediglich aus einer horizontalen Schicht zu, die auf derselben Höhe angeordnet ist, auf der sich auch die Abführöffnung befindet. Das Strömungsbild wird sich allerdings so einstellen, dass der Abführöffnung auch solches Wasser zuströmt, das oberhalb der Abführöffnung befindlich ist, also eine höhere Temperatur aufweist. Dies zieht den Effekt nach sich, dass sich eine vertikale Strömung innerhalb der Abführkammer ausbildet, die umso stärker ausfällt, desto höher der Durchsatz durch den Energieerzeuger eingestellt ist. Die Folge dessen ist eine unerwünschte Durchmischung unterschiedlicher Temperaturniveaus innerhalb der Abführkammer. Mittels des erfindungsgemäßen Schottelements, welches die Abführkammer unterteilt, kann dies unterbunden werden, da die vertikale Strömung durch das Schottelemente abgeschnitten wird.

Eine weitere Möglichkeit um die Ausbildung eines ausgeprägten, die Schichtung des Speichers beeinträchtigenden Strömungsbildes im Zuge der Abführung des Wärmeträgermediums aus dem Schichtenspeicher zu vermindern, besteht darin, die Abführkammer mittels eines vertikal orientierten Rohrelements zu unterteilen, wobei das Rohrelement die Abführkammer in eine Abführvorkammer und eine Abführhauptkammer unterteilt und ein Mantel des Rohrelements eine Vielzahl von über dessen Höhe verteilten Öffnungen aufweist, durch die das Wärmeträgermedium von der Abführvorkammer in die Abführhauptkammer leitbar ist, wobei in Fließrichtung des Wärmeträgermediums betrachtet die Abführhauptkammer vorzugsweise der Abführvorkammer nachgeschaltet ist und vorzugsweise die mindestens zwei Abführöffnungen in der Abführhauptkammer angeordnet sind. Die Unterteilung der Abführkammer in die Abführvor- und Abführhauptkammer führt dazu, dass das aus dem Schichtenspeicher zu entnehmende Wasser vor dem Austritt durch eine Abführöffnung ein abermals durch Öffnungen einer Wandung (hier des die Abführhauptkammer begrenzenden Rohrelements) geleitet werden muss und dabei eine Abbremsung erfährt, so dass eine Durchmischung benachbarter Schichten entsprechend weiter reduziert wird.

Ferner ist es durch eine geschickte Platzierung der Öffnungen im dem Rohrelement möglich, den Fließweg des Wassers innerhalb des Schichtenspeichers und analog eine Aufenthaltsdauer eines gedachten Wasserteilchens innerhalb des Schichtenspeichers zu erhöhen. Dabei gilt, dass eine lange Aufenthaltsdauer eines Wasserteilchens innerhalb des Schichtenspeichers einer kurzen Aufenthaltsdauer vorzuziehen ist, so dass genügend Zeit zur Verfügung steht, damit sich eine ausgeprägte Temperaturschichtung einstellen kann. Die Unterteilung der Abführkammer in zwei einzelne Kammern begünstigt diesen Vorgang.

Analog zu obiger Beschreibung, ist eine solche Abführhauptkammer besonders vorteilhaft, die ein horizontal orientiertes Schottelement aufweist, das die Abführhauptkammer in eine obere und eine untere Abführhauptkammersektion unterteilt und vorzugsweise die obere Abführhauptkammersektion fluiddicht von der unteren Abführhauptkammersektion abtrennt, wobei vorzugsweise mindestens eine Abführöffnung mit der unteren Abführhauptkammersektion und mindestens eine weitere Abführöffnung mit der oberen Abführhauptkammersektion korrespondieren.

Besonders vorteilhaft ist ein solcher Schichtenspeicher, bei dem die Trennelemente und/oder das mindestens eine Schottelement und/oder die Rohrleitungen aus Kunststoff, insbesondere Hart-PVC, und/oder aus mit Kunststoff beschichtetem Material, insbesondere mit Kunststoff beschichtetem Blech, gefertigt sind. Der Kunststoff ist besonders zu bevorzugen, da er die Wärme des Wassers besonders schlecht leitet. Insbesondere sich vertikal in dem Schichtenspeicher erstreckende Bauteile (Rohrleitungen, Trennwände, äußerer Mantel des Speicherbehälters etc.) sollten aus solchem Material gefertigt sein, damit ein Wärmetransport von einer warmen oberen Wasserschicht zu einer kalten unteren Wasserschicht entlang dieser Bauteile möglichst gering gehalten wird. Alternativ zum Hart-PVC ist auch der Einsatz von Polypropylen oder anderer Kunststoffe ohne weiteres denkbar.

Um die Einsetzbarkeit des Schichtenspeichers zu erhöhen, ist es besonders vorteilhaft, wenn sämtliche Rohrleitungen durch ein Bodenelement des Speicherbehälters in den Schichtenspeicher geführt sind und entsprechend den Speicherbehälter auf einer Unterseite verlassen. Auf diese Weise ist es besonders einfach, den Schichtenspeicher anzuschließen, da er unabhängig von seitlichen Anschlüssen ist und folglich nicht in einer bestimmten Stellung im jeweiligen Raum stehen muss.

In einer besonders vorteilhaften Ausgestaltung des erfindungsgemäßen Schichtenspeichers weisen sowohl die Zuführkammer als auch die Abführkammer von einem Bodenelement des Schichteinsatzes aus betrachtet eine geringere Höhe auf als die Beruhigungskammer. Während die Zuführkammer im Wesentlichen die Durchmischung der Schichtung der unterschiedlichen Temperaturschichten im Zuge der Einleitung des Wärmeträgermediums in den Schichtenspeicher verhindern soll, ist die Abführkammer insbesondere vorgesehen, um eine Durchmischung der Schichten im Zuge der Entnahme von Wasser aus dem Schichtenspeicher zu minimieren. Die Beruhigungskammer dient dabei als Mittelkammer zwischen der Zuführ- und der Abführkammer und stellt eine für das Wasser zu überwindende Strecke innerhalb des Schichtenspeichers dar, da jedes Wasserteilchen vor dem Austritt aus dem Schichtenspeicher durch die Beruhigungskammer fließen muss. Da keine Leitungen direkt mit der Beruhigungskammer korrespondieren, ist sie nicht mit turbulenten Strömungen beaufschlagt und bildet somit die "ruhigste" Kammer des Schichtenspeichers. In ihr ist die Ausbildung der Temperaturschichten besonders ungestört und besonders ausgeprägt.

Durch die "höhere" Ausbildung der Beruhigungskammer, also einen zusätzlichen oberen Bereich oberhalb der Zuführkammer und der Abführkammer, kann die oberste wärmste Schicht des Schichtenspeichers besonders groß ausgebildet werden, so dass stets ausreichend Wasser auf der höchsten Temperatur zur Verfügung steht. Wäre dies nicht gegeben, würde die "wärmste Schicht" alsbald über eine oberste Zuführkammersektion nach unten hinauswachsen und fortwährend durch kühleres Wasser, dass in eine unterhalb der obersten Zuführkammersektion angeordnete Zuführkammersektion einströmt, abgekühlt werden, was einen Energieverlust zur Folge hätte.

Vorteilhafterweise erstreckt sich die Beruhigungskammer in einem oberen Abschnitt des Schichtenspeichers über einen gesamten horizontal geführten Querschnitt des Speicherbehälters. Auf diese Weise kann möglichst viel des Wärmeträgermediums als "heißeste Schicht" des Schichtenspeichers eingelagert werden. Optimalerweise sind hierbei die Zuführkammer und die Abführkammer jeweils an einem oberen Ende mittels jeweils eines horizontal orientierten Deckenelements von der Beruhigungskammer abgetrennt. Auf diese Weise wird ein vertikaler Strom des Wärmeträgermediums zwischen der obersten Zuführkammersektion beziehungsweise einem oberen Bereich der Abführkammer und dem oberen Bereich der Beruhigungskammer unterbunden, so dass das Wasser stets durch die Öffnungen der Trennelemente fließen muss, um von der Zuführkammer in die Beruhigungskammer beziehungsweise aus der Beruhigungskammer in die Abführkammer zu gelangen.

Im Zusammenhang mit einer solchen Ausgestaltung der Höhenverhältnisse der Zuführ-, Beruhigungs- und Abführkammer, ist es besonders vorteilhaft, eine Abführöffnung vorzusehen, die mit der Beruhigungskammer korrespondiert und vorzugsweise in einem oberen Bereich der Beruhigungskammer angeordnet ist. Typischerweise handelt es sich bei dieser Abführöffnung um die Öffnung, die der Versorgung der Trinkwassererwärmung mit warmem Wasser dient. Dadurch, dass die Abführöffnung in dem oberen Bereich der Beruhigungskammer angeordnet ist, vorteilhafterweise oberhalb der Abführkammer, korrespondiert sie ausschließlich mit der wärmsten Schicht im Schichtenspeicher. Da die Entnahme warmen Wassers für die Aufheizung von Trinkwasser nur sehr punktuell, dafür aber in erheblichen Mengen erforderlich ist, ist die Anbindung der zugehörigen Abführöffnung an die Beruhigungskammer besonders sinnvoll, da die Beruhigungskammer einen großen Strömungsquerschnitt aufweist, der bewirkt, dass auch bei der Entnahme einer großen Wassermenge keine hohen Strömungsgeschwindigkeiten innerhalb des Schichtenspeichers auftreten.

Die zugrunde liegende Aufgabe wird ausgehend von einem Schichtenspeicher der eingangs beschriebenen Art ferner dadurch gelöst, dass die Zuführkammer, die Beruhigungskammer und die Abführkammer jeweils an einen äußeren Mantel des Speicherbehälters angrenzen. Diese Art der Anordnung der einzelnen Kammern führt dazu, dass eine Fließstrecke des Wassers ausgehend von der Zuführkammer zu der Abführkammer möglichst lang ist, so dass das Wasser ausreichend Zeit zur Verfügung hat, eine Schichtung auszubilden. Kurzschlüsse zwischen einer Zuführöffnung und einer Abführöffnung, wie sie nach dem Stand der Technik potentiell möglich sind, können auf diese Weise unterbunden werden, da das Wasser auf einen langen Weg gezwungen wird.

Vorteilhafterweise sollten die Kammern an dem des Speicherbehälters so angeordnet sein, dass sich die Zuführkammer und die Abführkammer "gegenüberstehen", das heißt, dass beide Kammern auf sich gegenüberliegenden Seiten der Beruhigungskammer angeordnet sind. Auf diese Weise ist gewährleistet, dass der Fließweg von einer Zuführöffnung zu einer Abführöffnung maximal ist.

### Ausführungsbeispiele

Die Erfindung wird nachstehend anhand eines Ausführungsbeispiels, das in den Figuren dargestellt ist, näher erläutert.

Es zeigen:
- Fig. 1:: Eine Ansicht einer Zuführkammer eines Schichteinsatzes eines erfindungsgemäßen Schichtenspeichers,
- Fig. 2:: Eine weitere Ansicht des Schichteinsatzes des erfindungsgemäßen Schichtenspeichers,
- Fig. 3:: Eine Ansicht einer Abführkammer des Schichteinsatzes des erfindungsgemäßen Schichtenspeichers und
- Fig. 4:: Eine Darstellung einer Abführhauptkammer des erfindungsgemäßen Schichtenspeichers.

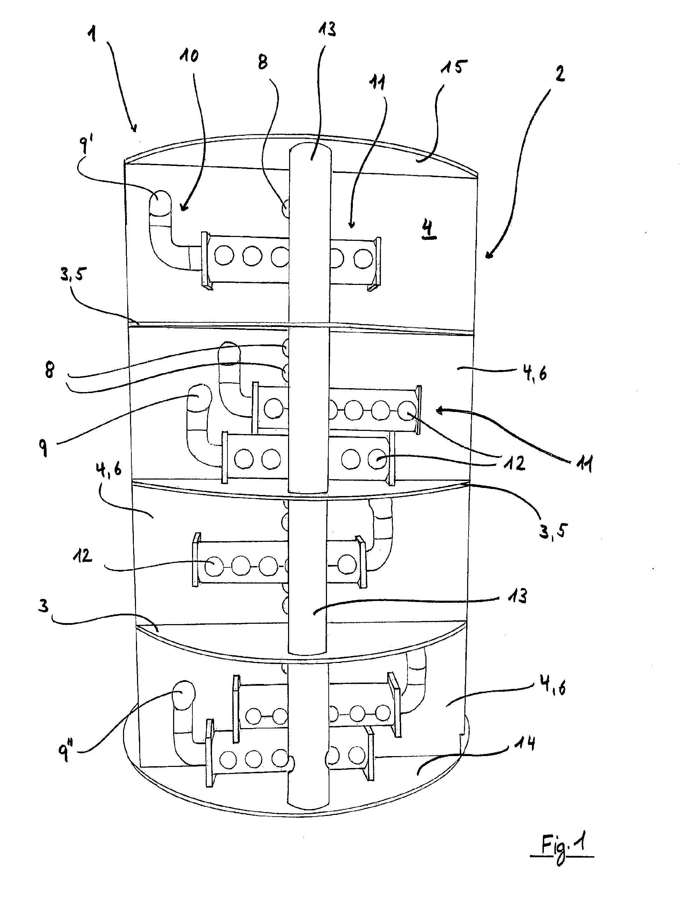

In einem Ausführungsbeispiel, das in Figur 1 dargestellt ist, ist eine Zuführkammer 2 eines Schichteinsatzes 1 eines erfindungsgemäßen Schichtenspeichers dargestellt, die mittels drei Schottelementen 3 in vier Zuführkammersektionen 4 unterteilt ist. Die Schottelemente 3 sind horizontal orientiert und entlang einer Kante 5 rundlich geformt, so dass sie möglichst gut an einen nicht dargestellten zylindrischen Mantel eines Speicherbehälters angepasst sind. Ferner weist die Zuführkammer 2 ein Trennelement 6 auf, die die Zuführkammer 2 von einer in Figur 1 nicht dargestellten Beruhigungskammer 7 räumlich abtrennt. Dieses Trennelement 6 ist mit über dessen Höhe verteilten Öffnungen 8 versehen, die eine Verbindung zwischen der Zuführkammer 2 beziehungsweise den einzelnen Zuführkammersektionen 4 und der Beruhigungskammer 7 bereitstellen. Ferner weist die Zuführkammer 2 Zuführöffnungen 9 auf, die jeweils an Rohrleitungen angeschlossen sind. Diese Rohrleitungen sind typischerweise an externe Komponenten wie beispielsweise Energieerzeuger und Energieverbraucher angebunden. So ist im dargestellten Beispiel eine oberste Zuführöffnung 9' mittels einer Rohrleitung an einen Vorlauf eines Brennwertkessels angeschlossen, während eine untere Zuführöffnung 9" mit einem Rücklauf einer Trinkwassererwärmungsanlage korrespondiert. Generell kann gesagt werden, dass bei einer umso höheren zu erwartenden Temperatur eines in den Schichtenspeicher eingeleiteten Wärmeträgermediums die jeweilige Zuführöffnung 9, durch die das Wärmeträgermedium in die Zuführkammer 2 einströmen soll, in einem umso höheren Bereich der Zuführkammer 2 angeordnet werden sollte. Auf diese Weise kann eine endgültige "Einschichtung" des zutretenden Wärmeträgermediums besonders zügig und störungsfrei ablaufen, da eine Dichte des eintretenden Wärmeträgermediums voraussichtlich einer auf einer zugehörigen Einleitungshöhe vorherrschenden Dichte des bereits in dem Schichtenspeicher befindlichen Wärmeträgermediums ähnlich ist.

Sämtliche Zuführöffnungen 9 sind in der Zuführkammer 2 mittels jeweils eines Einleitrohres 10 mit einem Verzögerungselement 11 verbunden, so dass Ströme eines Wärmeträgermediums, die durch die Zuführöffnungen 9 in den Schichtenspeicher geleitet werden, stets erst ein jeweiliges Verzögerungselement 11 durchströmen muss, bevor sie in eine jeweilige Zuführkammersektion 4 übertreten können. Bei dem Verzögerungselement 11 handelt es sich hier um ein rohrförmiges Element, welches Öffnungen 12 aufweist, durch die das Wärmeträgermedium hindurch treten kann. Die Anordnung sowohl der Einleitrohre 10 als auch der Verzögerungselemente 11 ist dabei so gewählt, dass das dem Schichtenspeicher zugeführte Wärmeträgermedium möglichst oft umgelenkt werden muss, bevor es in die Zuführkammer 2 einströmt. Auf diese Weise soll dem Strom des Wärmeträgermediums möglichst viel kinetische Energie entzogen werden, so dass eine Einströmgeschwindigkeit des Wärmeträgermediums bei einem Durchtritt desselben durch die Öffnungen 12 des jeweiligen Verzögerungselements 11 in die jeweilige Zuführkammersektion 4 möglichst gering ist und entsprechend turbulenzarm ausfällt. Auf diese Weise kann sichergestellt werden, dass das in den Schichtenspeicher eintretende Wärmeträgermedium lediglich geringe Verwirbelungen und damit einhergehend eine lediglich geringe Durchmischung aneinander angrenzender Temperaturschichten des Wärmeträgermediums in der jeweiligen Zuführkammersektion 4 bewirkt.

Insbesondere der letztgenannte Effekt der geringen Durchmischung aneinander angrenzender Temperaturschichten des Wärmeträgermediums wird durch die Anordnung der erfindungsgemäßen Schottelemente 3 besonders begünstigt. Diese bewirken nämlich, dass ein lokal in eine Zuführkammersektion 4 eingeleiteter Strom des Wärmeträgermediums darin gehindert ist, eine Temperaturschichtung, die in den übrigen Zuführkammersektionen 4 vorherrscht, negativ zu beeinflussen. Darüber hinaus wirken die Schottelemente 3 positiv hinsichtlich einer weiteren Abbremsung des in den Schichtenspeicher eintretenden Stroms des Wärmeträgermediums, so dass bei einem Übertritt desselben von einer jeweiligen Zuführkammersektion 4 in die Beruhigungskammer 7 die Strömungsgeschwindigkeit bereits weiter abgenommen hat und die Temperaturschichtung des Wärmeträgermediums in der Beruhigungskammer 7 nicht zu stören vermag. Außerdem ist durch die bereits starke Abbremsung im Bereich der Zuführkammersektion 4 bereits eine Angleichung der Temperaturschichtung des Wärmeträgermediums erreicht worden, so dass eine Ausgleichung der Temperaturverhältnisse in der Beruhigungskammer 7 weitestgehend entfällt. All dies ist positiv für eine möglichst ruhige und ungestörte Konservierung der gewünschten Temperaturschichtung.

Die Möglichkeit der korrekten "Einordnung" des in die Zuführkammer 2 geleiteten Wärmeträgermediums bereits in der Zuführkammer 2 wird dabei insbesondere durch ein vertikal orientiertes rohrförmiges Austauschelement 13 begünstigt, welches sich über die gesamte Höhe der Zuführkammer 2 erstreckt. Dieses ist von einer Innenseite des Schichtenspeichers aus betrachtet über dessen Höhe verteilt mit in Figur 1 nicht erkennbaren Öffnungen versehen. Im Bereich der Schottelemente 3 durchstößt das Austauschelement 13 erstgenannte, so es einen durchgehenden Strömungsquerschnitt für das Wärmeträgermedium bereitstellt, der einen Austausch desselben zwischen den einzelnen Zuführkammersektionen 4 ermöglicht. Auf diese Weise kann eine Angleichung der Temperaturschichtung des Wärmeträgermediums bereits in der Zuführkammer erreicht werden, wobei mittels der Schottelemente 3 dennoch eine Durchmischungsgefahr der aneinander angrenzenden Temperaturschichten stark reduziert wird.

Die Zuführkammer 2 ist an einem unteren Ende durch ein Bodenelement 14 des Schichteinsatzes und an einem oberen Ende durch ein Deckenelement 15 begrenzt.

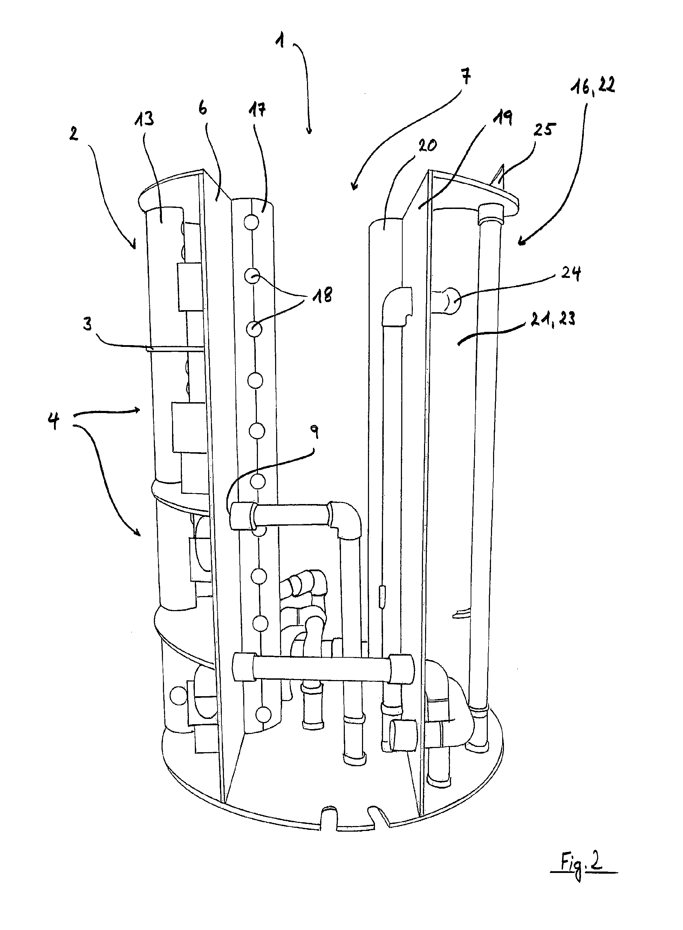

Figur 2 zeigt dasselbe Ausführungsbeispiel in einer solchen Perspektive, die sowohl die Zuführkammer 2, als auch die Beruhigungskammer 7 zeigt. Ferner ist in der gezeigten Perspektive auf einer rechten Seite eine Abführkammer 16 angeordnet, welche später genauer erläutert wird.

In einem Durchtrittsbereich des Trennelements 6, der die Öffnungen 8 aufweist, weist die Beruhigungskammer 7 ein Umlenkelement 17 auf, welches eine Form eines halben Rohrelements aufweist. Dieses Umlenkelement 17 ist über dessen Höhe betrachtet ebenso wie das Trennelement 6 mit Öffnungen 18 versehen. Diese Öffnungen 18 sind so angeordnet, dass ein aus den Zuführkammersektionen 4 in die Beruhigungskammer 7 überströmender Strom des Wärmeträgermediums innerhalb des Umlenkelements 17 umgelenkt werden muss, um von den Öffnungen 8 des Trennelements 6 zu den Öffnungen 18 des Umlenkelements 17 zu gelangen. Diese Umlenkung bewirkt abermals eine Beruhigung der Strömung des Wärmeträgermediums, was wiederum eine Durchmischung der Temperaturschichten reduziert.

Analog zu dem Umlenkelement 17, das einen Durchfluss von der Zuführkammer 2 zu der Beruhigungskammer 7 gemäß obiger Erläuterung bremst, ist an einem Trennelement 19, die die Beruhigungskammer 7 von der Abführkammer 16 abtrennt ein weiteres Umlenkelement 20 angeordnet, welches ebenso wie das Umlenkelement 17 die Form eines halben Rohrelements aufweist. Das Umlenkelement 20 weist ferner ebenfalls Öffnungen auf, die einen Durchtritt des Wärmeträgermediums von der Beruhigungskammer 7 in das Umlenkelement 20 ermöglichen. Diese Öffnungen, die in Figur 2 nicht erkennbar sind, sind analog zum Umlenkelement 17 über eine gesamte Höhe des Umlenkelements 20 angeordnet. Die Öffnungen sind dabei auf einer den Öffnungen 18 des Umlenkelements 17 abgewandten Seite des Umlenkelements 20 angeordnet. Die Öffnungen 18 des Umlenkelements 17 und die Öffnungen des Umlenkelements 20 weisen folglich sozusagen in unterschiedliche Richtungen. Dies hat den Hintergrund, dass das den Schichtenspeicher durchströmende Wärmeträgermedium auf seinem Weg von der Zuführkammer 2 hin zu der Abführkammer 16 auf diese Weise einen möglichst langen Weg zurücklegen muss und ferner eine Fließrichtung des Wärmeträgermediums mehrfach geändert werden muss. Auf diese Weise werden hohe Fließgeschwindigkeiten, die stets mit der Gefahr einer Durchmischung und somit Zerstörung der Temperaturschichtung einhergehen, weitestgehend unterbunden.

Die Beruhigungskammer 7 weist eine größere Höhe auf als die Zuführkammer 2 und die Abführkammer 16, wobei der Schichteinsatz 1 in einem Betriebszustand von dem Mantel des Speicherbehälters umgeben ist, der die Zuführkammer 2 und die Abführkammer 16 um ein bestimmtes Maß überragt. In einem oberen Bereich des Schichtenspeichers, der hier oberhalb des Deckenelements 15 der Zuführkammer 2 angeordnet ist, wird entsprechend ein gesamter horizontal geführter Querschnitt durch den Schichtenspeicher von der Beruhigungskammer 7 gebildet. Auf diese Weise ist es möglich, eine besonders große Menge warmen Wassers in der Beruhigungskammer 7 vorzuhalten, auf die im Betriebszustand jederzeit zurückgegriffen werden kann. Die Umlenkelemente 17, 20 sind dabei ebenso wie die Zuführkammer 2 und die Abführkammer 16 jeweils mittels Deckenelementen von dem oberen Bereich des Schichtenspeichers abgetrennt.

Neben der Zuführkammer 2 und der Beruhigungskammer 7 ist in der Figur 2 ferner die Abführkammer 16 erkennbar. Im gezeigten Beispiel ist diese mittels eines vertikal orientierten Rohrelements 21 in eine Abführvorkammer 22 und eine Abführhauptkammer 23 unterteilt. Sämtliche Abführöffnungen 24, die mit der Abführkammer 16 korrespondieren, sind hier mit der Abführhauptkammer 23 verbunden, so dass das Wärmeträgermedium aus dem Schichtenspeicher stets aus der Abführhauptkammer 23 entnommen wird. Eine Ausnahme hiervon bildet die Abführöffnung 25, die in einem Deckenelement 31 der Abführkammer 16 angeordnet ist und mit dem oberen Bereich der Beruhigungskammer 7 korrespondiert. Mittels dieser Abführöffnung 25 kann direkt das Wärmeträgermedium aus der Beruhigungskammer 7 entnommen werden, wobei das entnommene Wärmeträgermedium aufgrund der Anordnung der Abführöffnung 25 im oberen Bereich des Schichtenspeichers typischerweise eine hohe Temperatur, beispielsweise etwa 70 °C aufweist. Diese Abführöffnung 25 dient typischerweise der Entnahme des Wärmeträgermediums beziehungsweise der Entnahme einer solchen Temperatur, die zur Aufheizung von Trinkwasser genutzt wird.

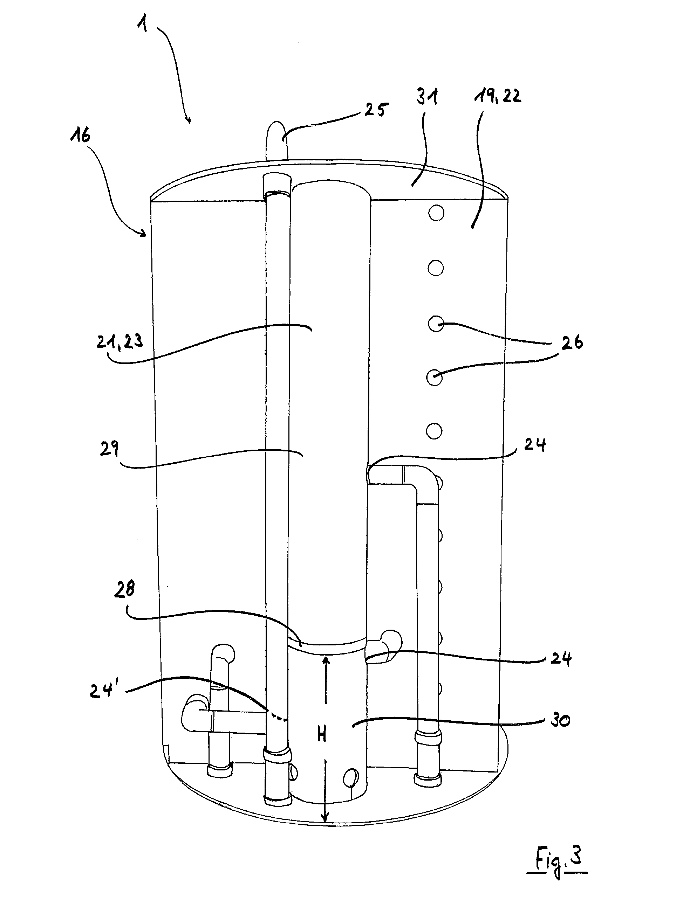

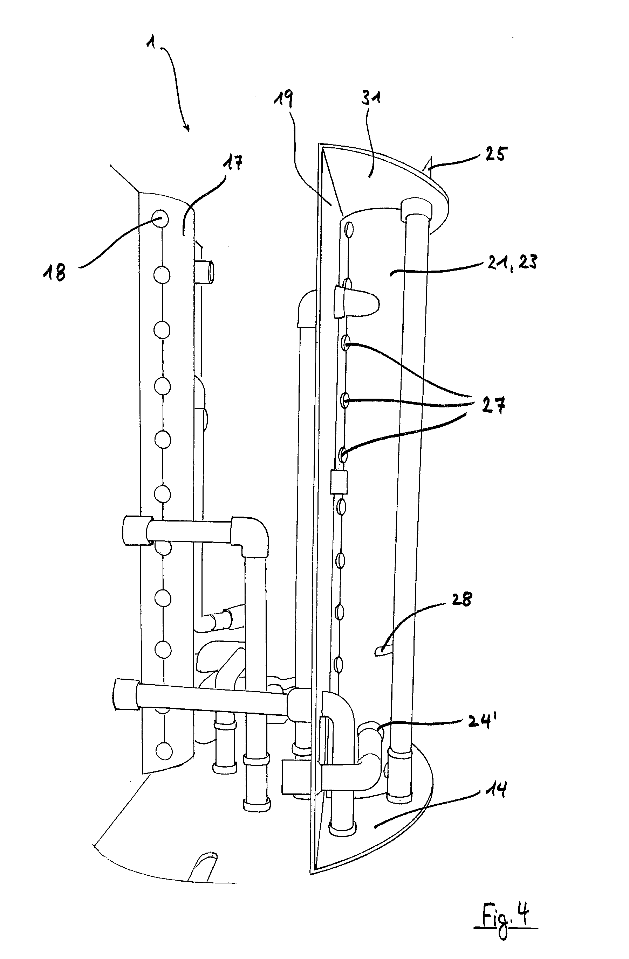

Die Abführkammer 16 ist besonders gut aus Figur 3 erkennbar, wobei es sich bei dem in Figur 3 dargestellten Schichtenspeicher um denselben Schichtenspeicher handelt, der bereits in den vorigen Figuren gezeigt wurde. Das Trennelement 19, das gemäß obiger Erläuterung die Abführkammer 16 von der Beruhigungskammer 7 abtrennt, ist entlang einer rechten Seite mit Öffnungen 26 versehen, durch die das Wärmeträgermediums ausgehend von der Beruhigungskammer 7 durch das Umlenkelement 20 in die Abführkammer 16 gelangt. Die Öffnungen 26 sind über eine gesamte Höhe der Abführkammer 16 angeordnet, so dass das Wärmeträgermedium unabhängig von dessen Temperatur in die Abführkammer 16 beziehungsweise die Abführvorkammer 22 übertreten kann. Ausgehend von der Abführvorkammer 22 muss das Wärmeträgermedium, bevor es zu einer der Abführöffnungen 24 gelangen kann, erst in die Abführhauptkammer 23 eintreten. Dies erfolgt abermals mittels in dem Rohrelement 21 angeordneten Öffnungen 27, die besonders gut in Figur 4 erkennbar sind. Eine Lage der Öffnungen 27 entlang einer Höhe des Rohrelements 21 ist dabei so gewählt, dass der Strom des Wärmeträgermediums ausgehend von den Öffnungen 26 in dem Trennelement 19 auf einen möglichst langen Fließweg gezwungen wird, bis schlussendlich die Abführhauptkammer 23 und folglich die Abführöffnungen 24 erreicht werden.

Das Rohrelement 21, das die Abführvorkammer 22 von der Abführhauptkammer 23 abtrennt, weist auf einem Höhenniveau H ein Schottelement 28 auf, welches die Abführhauptkammer 23 in eine obere Abführhauptkammersektion 29 und eine untere Abführhauptkammersektion 30 unterteilt. Das Schottelement 28 ist dabei so ausgeführt, dass es die obere und die untere Abführhauptkammersektionen 29, 30 fluiddicht voneinander abtrennt. Die Abtrennung der Abführhauptkammersektionen 29, 30 dient dazu, bei einer Entnahme des relativ kalten Wärmeträgermediums an einem unteren Ende der Abführkammer 16 durch eine Abführöffnung 24' eine nach unten gerichtete Strömung innerhalb der Abführhauptkammer 23 zu verhindern. Das Schottelement 28 bewirkt somit, dass bei der Entnahme des kalten Wärmeträgermediums lediglich eine Strömung initiiert wird, die im Wesentlichen auf demselben Höhenniveau stattfindet, auf dem auch die Abführöffnung 24' angeordnet ist. Auf diese Weise kann sichergestellt werden, dass möglichst viel kaltes Wärmeträgermedium entnommen wird und die höher gelegenen warmen Temperaturschichten nicht gestört werden.

Der in den Figuren 1 bis 4 gezeigte Schichteinsatz 1 ist vollständig aus Kunststoffkomponenten gefertigt. Auf diese Weise wird ein Wärmetransport zwischen den einzelnen Temperaturschichten des Wärmeträgermediums über Einbauten weitestgehend unterbunden.

Die Rohrleitungen, die sowohl die Zuführöffnungen als auch die Abführöffnungen mit den Komponenten des Heizungssystems verbinden, werden im gezeigten Ausführungsbeispiel durch ein Bodenelement des Schichtenspeichers aus demselben heraus geführt. Dies ermöglicht eine besonders einfach Montage, da eine Ausrichtung des Schichtenspeichers aufgrund seitlicher Anschlüsse nicht berücksichtigt werden muss.

Vorstehend ist bereits mehrfach auf das Bestreben hingedeutet worden, einen Fließweg des Wärmeträgermediums durch den Schichtenspeicher möglichst lang zu gestalten. Diese Auslegung führt dazu, dass ein fiktives Teilchen des Wärmeträgermediums, das durch eine Zuführöffnung 9 in den Schichtenspeicher eintritt möglichst viel Zeit benötigen sollte, um von der Zuführöffnung 9 bis zu einer Ausführöffnung 24 zu gelangen. Dies birgt den Vorteil, dass sich in dem Schichtenspeicher bei einer langen Verweilzeit der einzelnen Teilchen eine besonders ausgeprägte Schichtung einstellen kann und eine Durchmischung der einzelnen Temperaturschichten vermieden wird. Um die Verweilzeit möglichst lang zu gestalten, ist es besonders vorteilhaft, wenn die Zuführkammer 2 und die Abführkammer 16 möglichst weit voneinander entfernt in dem Schichtenspeicher angeordnet sind. Dies ist in dem in den Figuren 1 bis 4 gezeigten Beispiel dadurch gewährleistet, dass die Zuführkammer 2 und die Abführkammer 16 an "gegenüberliegenden Seiten" des Schichtenspeichers angeordnet sind, wobei sie jeweils teilweise von dem äußeren Mantel des Speicherbehälters begrenzt werden. Diese Anordnung der Zuführkammer 2 und der Abführkammer 16 an dem äußeren Mantel ist am besten geeignet, um den Fließweg eines Teilchens des Wärmeträgermediums maximal zu gestalten. Eine Anordnung gemäß dem Stand der Technik, bei der die Zuführkammer zentral in dem Schichtenspeicher innerhalb eines Rohrelements angeordnet ist (DE 101 23 305 A1) führt hingegen dazu, dass der Fließweg und somit die Verweilzeit besonders kurz ausfallen kann, da ein Fließweg von einer Zuführöffnung zu einer Abführöffnung im ungünstigsten Fall verhältnismäßig kurz ist.

### Bezugszeichenliste

- 1: Schichteinsatz
- 2: Zuführkammer
- 3: Schottelement
- 4: Zuführkammersektion
- 5: Kante
- 6: Trennelement
- 7: Beruhigungskammer
- 8: Öffnung
- 9, 9', 9": Zuführöffnung
- 10: Einleitrohr
- 11: Verzögerungselement
- 12: Öffnung
- 13: Austauschelement
- 14: Bodenelement
- 15: Deckenelement
- 16: Abführkammer
- 17: Umlenkelement
- 18: Öffnung
- 19: Trennelement
- 20: Umlenkelement
- 21: Rohrelement
- 22: Abführvorkammer
- 23: Abführhauptkammer
- 24, 24': Abführöffnung
- 25: Abführöffnung
- 26: Öffnung
- 27: Öffnung
- 28: Schottelement
- 29: Abführhauptkammersektion
- 30: Abführhauptkammersektion
- 31: Deckenelement

- H: Höhenniveau

## Patentansprüche

1. Schichtenspeicher zum Speichern von Wärmeenergie, aufweisend einen Schichteinsatz (1) und einen Speicherbehälter, der mittels Rohrleitungen mit mindestens einem Energieerzeuger sowie mindestens einem Energieverbraucher verbunden ist und mindestens zwei Zuführöffnungen (9, 9', 9") und zwei Abführöffnungen (24, 24') aufweist, wobei mindestens eine Zuführöffnung (9, 9', 9") mit dem Energieerzeuger und mindestens eine Zuführöffnung (9, 9', 9") mit dem Energieverbraucher sowie mindestens eine Abführöffnung (24, 24') mit dem Energieerzeuger und mindestens eine Abführöffnung (24, 24') mit dem Energieverbraucher verbunden sind, wobei mittels der Zuführöffnungen (9, 9', 9") dem Schichtenspeicher ein Wärmeträgermedium zuführbar und mittels der Abführöffnungen (24, 24') das Wärmeträgermedium aus dem Schichtenspeicher abführbar ist, wobei der Schichtenspeicher eine Zuführkammer (2), eine Beruhigungskammer (7) und eine Abführkammer (16) aufweist, die in horizontale Richtung betrachtet nebeneinander angeordnet sind und sich jeweils vertikal erstrecken, wobei die mindestens zwei Zuführöffnungen (9, 9', 9") mit der Zuführkammer (2) und die mindestens zwei Abfuhröffnungen (24, 24') mit der Abführkammer (16) korrespondieren, wobei die Zuführkammer (2), die Beruhigungskammer (7) und die Abführkammer (16) in eine Fließrichtung des Wärmeträgermediums ausgehend von einer jeweiligen Zuführöffnung (9, 9', 9") hin zu einer jeweiligen Abführöffnung (24, 24') betrachtet in Reihe hintereinander geschaltet sind und zwei aneinander grenzende Kammern (2, 7, 16) jeweils mittels eines im wesentlichen vertikal angeordneten Trennelements (6, 19) räumlich voneinander getrennt sind, wobei die Trennelemente (6, 19) eine Vielzahl von über deren Höhe verteilte Öffnungen (8, 26) aufweisen, durch die das Wärmeträgermedium von einer an das jeweilige Trennelement (6, 19) angrenzenden Kammer (2, 7) zu einer jeweils anderen an das Trennelement (6, 19) angrenzenden Kammer (7, 16) leitbar ist, **dadurch gekennzeichnet, dass** die Zuführkammer (2) mittels mindestens eines horizontal orientierten Schottelements (3) in eine obere und eine untere Zuführkammersektion (4), vorzugsweise mittels einer Vielzahl horizontal orientierter Schottelemente (3) in mehrere vertikal übereinander angeordnete Zuführkammersektionen (4), unterteilt ist, wobei die einzelnen Zuführkammersektionen (4) vorzugsweise hydraulisch miteinander verbunden sind.

2. Schichtenspeicher nach Anspruch 1, **dadurch gekennzeichnet, dass** die Zuführkammersektionen (4) mittels mindestens eines rohrförmigen Austauschelements (13) hydraulisch miteinander verbunden sind, wobei sich das Austauschelement (13) vorzugsweise über eine gesamte Höhe der Zuführkammer (2) erstreckt.

3. Schichtenspeicher nach Anspruch 1 oder 2, **gekennzeichnet durch** eine Vielzahl vertikal versetzter Zuführöffnungen (9, 9', 9"), die vorzugsweise mit unterschiedlichen Zuführkammersektionen (4) korrespondieren.

4. Schichtenspeicher nach einem der Ansprüche 1 bis 3, **gekennzeichnet durch** eine Vielzahl vertikal versetzter Abführöffnungen (24, 24'), die jeweils mit der Abführkammer (16) korrespondieren.

5. Schichtenspeicher nach einem der Ansprüche 1 bis 4, **gekennzeichnet durch** ein horizontal orientiertes Schottelement, das die Abführkammer (16) in eine untere Abführkammersektion und eine obere Abführkammersektion unterteilt und vorzugsweise die obere Abführkammersektion fluiddicht von der unteren Abführkammersektion abtrennt, wobei vorzugsweise mindestens eine Abführöffnung mit der unteren Abführkammersektion und mindestens eine weitere Abführöffnung mit der oberen Abführkammersektion korrespondieren.

6. Schichtenspeicher nach einem der Ansprüche 1 bis 4, **dadurch gekennzeichnet, dass** die Abführkammer (16) ein vertikal orientiertes Rohrelement (21) aufweist, welches die Abführkammer (16) in eine Abführvorkammer (22) und eine Abführhauptkammer (23) unterteilt, wobei ein Mantel des Rohrelements (21) eine Vielzahl von über dessen Höhe verteilten Öffnungen (27) aufweist, durch die das Wärmeträgermedium von der Abführvorkammer (22) in die Abführhauptkammer (23) leitbar ist, wobei in Fließrichtung des Wärmeträgermediums betrachtet die Abführhauptkammer (23) vorzugsweise der Abführvorkammer (22) nachgeschaltet ist und vorzugsweise die mindestens zwei Abführöffnungen (24, 24') in der Abführhauptkammer angeordnet sind.

7. Schichtenspeicher nach Anspruch 6, **gekennzeichnet durch** ein horizontal orientiertes Schottelement (28), das die Abführhauptkammer (23) in eine obere Abführhauptkammersektion (29) und eine untere Abführhauptkammersektion (30) unterteilt und vorzugsweise die obere Abführhauptkammersektion (29) fluiddicht von der unteren Abführhauptkammersektion (30) abtrennt, wobei vorzugsweise mindestens eine Abführöffnung (24') mit der unteren Abführhauptkammersektion (30) und mindestens eine weitere Abführöffnung (24) mit der oberen Abführhauptkammersektion (29) korrespondieren.

8. Schichtenspeicher nach einem der Ansprüche 1 bis 7, **dadurch gekennzeichnet, dass** die Trennelemente (6, 19) und/oder das mindestens eine Schottelement (3, 28) und/oder die Rohrleitungen aus Kunststoff, insbesondere Hart-PVC, und/oder aus mit Kunststoff beschichtetem Material, insbesondere mit Kunststoff beschichtetem Blech, gefertigt sind.

9. Schichtenspeicher nach einem der Ansprüche 1 bis 8, **dadurch gekennzeichnet, dass** sämtliche Rohrleitungen durch ein Bodenelement (14) des Speicherbehälters in den Schichtenspeicher geführt sind.

10. Schichtenspeicher nach einem der Ansprüche 1 bis 9, **gekennzeichnet durch** mindestens ein in der Zuführkammer (2) angeordnetes in sich geschlossenes Verzögerungselement (11), in das mindestens eine Zuführöffnung (9, 9', 9") mündet, wobei eine Wandung des Verzögerungselements (11) eine Vielzahl von Öffnungen (12) aufweist, **durch** die das Wärmeträgermedium ausgehend von der jeweiligen Zuführöffnung (9, 9', 9") in die Zuführkammer (2) leitbar ist, wobei im Falle mehrerer Zuführöffnungen (9, 9', 9") vorzugsweise jede Zuführöffnung (9, 9', 9") eine eigenes Verzögerungselement (11) aufweist.

11. Schichtenspeicher nach einem der Ansprüche 1 bis 10, **dadurch gekennzeichnet, dass** sowohl die Zuführkammer (2) als auch die Abführkammer (16) von einem Bodenelement (14) des Schichteinsatzes (1) aus betrachtet eine geringere Höhe aufweisen als die Beruhigungskammer (7).

12. Schichtenspeicher nach Anspruch 11, **dadurch gekennzeichnet, dass** die Beruhigungskammer (7) sich in einem oberen Abschnitt des Schichtenspeichers über einen gesamten horizontal geführten Querschnitt des Speicherbehälters erstreckt.

13. Schichtenspeicher nach Anspruch 11 oder 12, **dadurch gekennzeichnet, dass** eine Abführöffnung (25) mit der Beruhigungskammer (7) korrespondiert und vorzugsweise in einem oberen Bereich der Beruhigungskammer (7) angeordnet ist.

14. Schichtenspeicher nach einem der Ansprüche 1 bis 13, **dadurch gekennzeichnet, dass** sowohl die Zuführkammer (2) als auch die Abführkammer (16) jeweils an einem oberen Ende jeweils mittels eines horizontal orientierten Deckenelements (15, 31) von der Beruhigungskammer (7) abgetrennt sind.

15. Schichtenspeicher zum Speichern von Wärmeenergie, aufweisend einen Schichteinsatz (1) und einen Speicherbehälter, der mittels Rohrleitungen mit mindestens einem Energieerzeuger sowie mindestens einem Energieverbraucher verbunden ist und mindestens zwei Zuführöffnungen (9, 9', 9") und zwei Abführöffnungen (24, 24') aufweist, wobei mindestens eine Zuführöffnung (9, 9', 9") mit dem Energieerzeuger und mindestens eine Zuführöffnung (9, 9', 9") mit dem Energieverbraucher sowie mindestens eine Abführöffnung (24, 24') mit dem Energieerzeuger und mindestens eine Abführöffnung (24, 24') mit dem Energieverbraucher verbunden sind, wobei mittels der Zuführöffnungen (9, 9', 9") dem Schichtenspeicher ein Wärmeträgermedium zuführbar und mittels der Abführöffnungen (24, 24') das Wärmeträgermedium aus dem Schichtenspeicher abführbar ist, wobei der Schichtenspeicher eine Zuführkammer (2), eine Beruhigungskammer (7) und eine Abführkammer (16) aufweist, die in horizontale Richtung betrachtet nebeneinander angeordnet sind und sich jeweils vertikal erstrecken, wobei die mindestens zwei Zuführöffnungen (9, 9', 9") mit der Zuführkammer (2) und die mindestens zwei Abfuhröffnungen (24, 24') mit der Abführkammer (16) korrespondieren, wobei die Zuführkammer (2), die Beruhigungskammer (7) und die Abführkammer (16) in eine Fließrichtung des Wärmeträgermediums ausgehend von einer jeweiligen Zuführöffnung (9, 9', 9") hin zu einer jeweiligen Abführöffnung (24, 24') betrachtet in Reihe hintereinander geschaltet sind und zwei aneinander grenzende Kammern (2, 7, 16) jeweils mittels eines im wesentlichen vertikal angeordneten Trennelements (6, 19) räumlich voneinander getrennt sind, wobei die Trennelemente (6, 19) eine Vielzahl von über deren Höhe verteilte Öffnungen (8, 26) aufweisen, durch die das Wärmeträgermedium von einer an das jeweilige Trennelement (6, 19) angrenzenden Kammer (2, 7) zu einer jeweils anderen an das Trennelement (6, 19) angrenzenden Kammer (7, 16) leitbar ist, **dadurch gekennzeichnet, dass** die Zuführkammer (2), die Beruhigungskammer (7) und die Abführkammer (16) jeweils an einen äußeren Mantel des Speicherbehälters angrenzen.
